# FASCICULE DE BREVET EUROPEEN

(11) **EP 1 529 259 B1**
(45) Date de publication et mention de la délivrance du brevet: **24.06.2009**
(21) Numéro de dépôt: 03755641.2
(22) Date de dépôt: 28.07.2003
(51) Int. Cl.: G06F 11/20

(54) **CONTINUITE DE FONCTIONNEMENT PAR REPLICATION D'UN LOGICIEL DANS UNE ARCHITECTURE MULTI-ORDINATEURS**
UNTERBRECHUNGSFREIER BETRIEB DURCH SOFTWARE-REPLIKATION IN EINER MULTICOMPUTER-ARCHITEKTUR
METHOD FOR REPLICATING A SOFTWARE APPLICATION IN A MULTI-COMPUTER ARCHITECTURE, METHOD FOR CARRYING OUT FUNCTIONAL CONTINUITY IMPLEMENTING SAID REPLICATION METHOD, AND MULTI-COMPUTER SYSTEM PROVIDED THEREWITH

(30) Priorité: 02.08.2002 FR 0209855
(43) Date de publication de la demande: 11.05.2005
(73) Titulaire: International Business Machines Corporation, Armonk, NY 10504 (US)
(72) Inventeur: VERTES, Marc, F-31830 Plaisance du Touch (FR); DUFOUR, Laurent, F-31830 Plaisance du Touch (FR); RICHARD, François, F-31120 Lacroix Falgarde (FR); KURZ, Gregory, F-31170 Tournefeuille (FR)
(74) Mandataire: Therias, Philippe
(86) Numéro de dépôt international: PCT/FR2003/002371
(87) Numéro de publication internationale: WO 2004/015574

(56) Documents cités:
- WO-A-97/49039
- US-A1- 2001 008 019
- KAM HONG SHUM: "Fault tolerant cluster computing through replication" PARALLEL AND DISTRIBUTED SYSTEMS, 1997. PROCEEDINGS., 1997 INTERNATIONAL CONFERENCE ON SEOUL, SOUTH KOREA 10-13 DEC. 1997, LOS ALAMITOS, CA, USA,IEEE COMPUT. SOC, US, 10 décembre 1997 (1997-12-10), pages 756-761, XP010267110 ISBN: 0-8186-8227-2
- VAYSBURD A: "Fault tolerance in three-tier applications: focusing on the database tier" RELIABLE DISTRIBUTED SYSTEMS, 1999. PROCEEDINGS OF THE 18TH IEEE SYMPOSIUM ON LAUSANNE, SWITZERLAND 19-22 OCT. 1999, LOS ALAMITOS, CA, USA,IEEE COMPUT. SOC, US, 19 octobre 1999 (1999-10-19), pages 322-327, XP010357037 ISBN: 0-7695-0290-3
- MURAKAMI K ET AL: "Design, implementation, and evaluation of highly available distributed call processing systems" FAULT-TOLERANT COMPUTING, 1998. DIGEST OF PAPERS. TWENTY-EIGHTH ANNUAL INTERNATIONAL SYMPOSIUM ON MUNICH, GERMANY 23-25 JUNE 1998, LOS ALAMITOS, CA, USA,IEEE COMPUT. SOC, US, 23 juin 1998 (1998-06-23), pages 118-127, XP010291284 ISBN: 0-8186-8470-4
- BIN YAO ET AL: "Proxy-based recovery for applications on wireless hand-held devices" RELIABLE DISTRIBUTED SYSTEMS, 2000. SRDS-2000. PROCEEDINGS THE 19TH IEEE SYMPOSIUM ON NURNBERG, GERMANY 16-18 OCT. 2000, LOS ALAMITOS, CA, USA,IEEE COMPUT. SOC, US, 16 octobre 2000 (2000-10-16), pages 2-10, XP010523941 ISBN: 0-7695-0543-0

## Description

La présente invention concerne un procédé pour répliquer une application logicielle dans une architecture multi-ordinateurs (cluster). Elle vise également un procédé pour réaliser une continuité de fonctionnement d'une application logicielle au sein d'un cluster d'ordinateurs, qui met en oeuvre le procédé de réplication selon l'invention, ainsi qu'un système multi-ordinateurs implémentant ce procédé de continuité de fonctionnement.

Le domaine de l'invention est celui des clusters d'ordinateurs formés de plusieurs ordinateurs collaborant entre eux. Comme ceux décrits par example dans la demande de brevet US 2001/008019 ou dans le document "Fault tolerant cluster computing through replication", KAM HONG SHUM, in Proceedings of the International Conference on Parallel and Distributed Systems, 1997, Seoul, South Korea 10-13 Dec. 1997, Los Alamitos, CA, USA, IEEE Comput. Soc. Ces clusters sont par exemple prévus pour exécuter des applications logicielles. Ainsi, à un instant donné, une application est exécutée sur l'un des ordinateurs du cluster, appelé noeud primaire ou opérationnel (OP), tandis que les autres ordinateurs du cluster sont appelés noeuds secondaires ou « stand-by » (SB), dans un contexte d'architecture redondante.

Or, l'exploitation de tels clusters montre que se posent des problèmes de fiabilité qui peuvent être dus à des défaillances du matériel ou du système d'exploitation, à des erreurs humaines, ou à la défaillance des applications elles-mêmes.

Pour résoudre ces problèmes de fiabilité, il existe actuellement des mécanismes, dits de haute disponibilité, qui sont mis en oeuvre sur la plupart des clusters actuels et qui sont basés sur un redémarrage automatique à froid de l'application sur un noeud de secours parmi l'un des noeuds secondaires du cluster.

Or ces mécanismes basés sur un redémarrage automatique ne permettent pas d'assurer une continuité totale du services fourni par l'application en cours d'exécution au moment de la défaillance.

En particulier, se pose le problème de la réplication d'une application logicielle au sein d'une architecture multi-ordinateurs, cette réplication devant assurer une continuité totale de service.

Un objectif principal de la présente invention est donc de proposer un procédé pour répliquer une application logicielle dans une architecture multi-ordinateurs (cluster), ladite application logicielle étant préalablement exécutée sur un premier ordinateur dudit cluster constituant un noeud primaire et étant destinée à être répliquée sur au moins un autre ordinateur dudit cluster constituant un noeud secondaire, comprenant une réplication des ressources associées à ladite application logicielle.

Cet objectif principal est atteint avec un tel procédé de réplication tel que défini dans l'une des revendications 1 à 8.

Il est important de noter que dans le procédé de réplication selon l'invention, le nombre de noeuds secondaires ou stand-by concernés peut être quelconque.

Le procédé de réplication selon l'invention peut être avantageusement mis en oeuvre pour une optimisation automatique de ressources informatiques par partage de charge par répartition dynamique de processus. Il peut aussi être utilisé pour une maintenance non interruptive par relocation à la demande de processus au travers d'un réseau de ressources informatiques, ou pour une préservation de contexte applicatif dans des applications mobiles.

Un autre but de la présente invention est de proposer un procédé pour réaliser une continuité de fonctionnement d'une application logicielle dans une architecture multi-ordinateurs (cluster), tel que défini dans l'une des revendications 9 à 14.

Ainsi, avec le procédé de réalisation de continuité de fonctionnement selon l'invention, il est désormais possible de disposer de noeuds secondaires pourvus de clones d'application résultant de la réplication de l'application et aptes à relayer sans discontinuité cette application en cas de détection de défaillance ou d'événement affectant le noeud principal.

La réplication mise en oeuvre dans le procédé de réplication selon l'invention est avantageusement de type holistique. On dispose ainsi d'un clonage de l'application au fil de l'eau, avec une mise à jour de ces clones, de façon déterministe et complète.

Ces clones sont dits « chauds », c'est-à-dire qu'ils sont la réplique exacte de l'application et de tout son contexte opératoire. Ils sont mis à jour régulièrement (périodiquement ou sur évènements caractéristiques). Ces clones contiennent toutes les ressources et informations requises par l'application pour fournir son service.

Le procédé de réplication selon l'invention permet en outre de superviser l'état de toutes les ressources nécessaires au bon fonctionnement de l'application. Quand la dégradation rédhibitoire de l'une d'entre elles est détectée, le procédé de réplication selon l'invention prévoit une élection d'un clone comme nouveau primaire et lui ordonne de prendre la main.

Cette élection est appelée basculement et est transparente pour le reste du monde qui communique avec l'application : bien que le noeud primaire soit mis hors service, le service fourni par l'application n'est pas interrompu car il est repris avec tout son contexte par le clone élu.

On peut ainsi garantir que tout message transmis par le reste du monde à l'application sera traité, soit par le noeud primaire (pré-basculement), soit par le clone (post-basculement).

La réplication holistique reprend des mécanismes déjà mis en oeuvre dans des systèmes existants de migration de process. Cependant, la conception et l'utilisation qui en sont faites dans le procédé de réplication selon l'invention diffèrent de tous les travaux antérieurs connus.

Le procédé de réalisation de continuité de fonctionnement selon l'invention met ainsi en oeuvre une réplication transparente, holistique et optimisée, dédiée à la continuité de service par délocalisation de l'application et virtualisation des ressources.

Avec ce procédé, on résout plusieurs limitations des implémentations classiques qui les rendaient inopérantes pour une utilisation en tolérance aux pannes au sein d'une architecture multi-ordinateurs en cluster.

Une première limitation résidait dans le problème de l'indépendance entre noeud primaire et noeud secondaire. Dans les systèmes classiques, la réplication d'une ressource d'un noeud primaire vers un noeud secondaire présuppose et nécessite la présence opérationnelle du noeud primaire pendant tout le procédé. Le procédé de réplication selon l'invention résout cette limitation, puisque le clone peut à tout instant vivre de façon autonome même en cas de disparition du primaire. Cette dé-corrélation primaire / secondaire est un pré requis pour la tolérance aux pannes.

Comme la réplication implémentée dans le procédé de réplication selon l'invention est holistique, on capture l'intégralité cohérente de ressources asynchrones interdépendantes. Dans les procédés de l'art antérieur, seuls étaient capturés les états de ressources indépendantes.

Une autre limitation des procédés de l'art antérieur résidait dans le problème de l'intrusivité. Le procédé de réplication selon l'invention est non intrusif sur le code source : les instances antérieures nécessitent de modifier le code source (ou de le concevoir explicitement) pour que les processus informatiques créés et les ressources utilisées puissent être migrés.

Il est à noter que pour la mise en oeuvre du procédé de réplication selon l'invention, on peut avantageusement utiliser des techniques d'ingénierie logicielle non intrusive dynamique, qui ont fait l'objet d'une demande de brevet publiée le 2 août 2002 sous le numéro FR2820221. Ces techniques d'ingénierie logicielle permettent de manipuler des applications dans leur représentation binaire (exécutable), de façon à rendre le procédé de réalisation de continuité de fonctionnement selon l'invention transparent pour l'application et donc générique.

D'autres avantages et caractéristiques de l'invention apparaîtront à l'examen de la description détaillée d'un mode de mise en oeuvre nullement limitatif, et des dessins annexés sur lesquels :
- la figure 1 illustre la fonction de miroir dynamique mise en oeuvre dans le procédé de réplication selon l'invention ;
- la figure 2 illustre schématiquement les principes de réplication de données mis en oeuvre dans le procédé de réplication selon l'invention ;

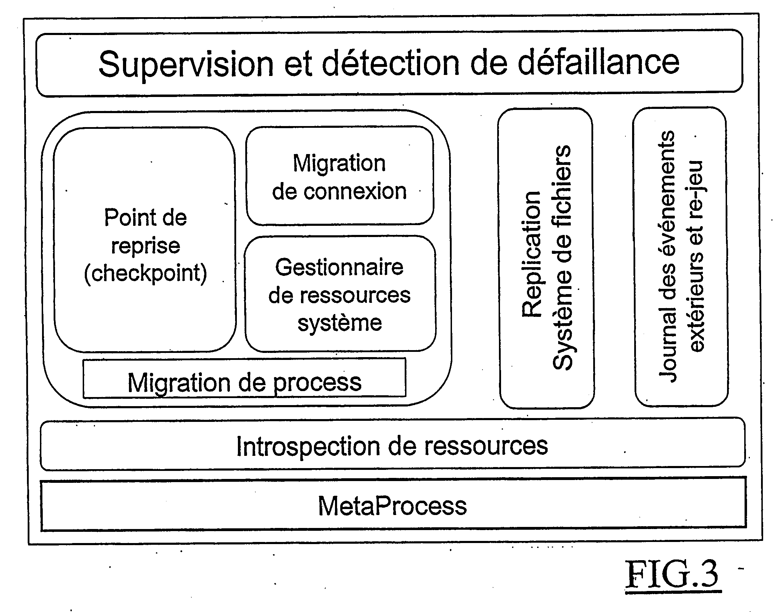

- la figure 3 représente un exemple d'architecture logicielle mettant en oeuvre le procédé de réplication selon l'invention, pour la supervision et la détection de défaillance ;
- la figure 4 illustre schématiquement des principes de supervision mis en oeuvre dans le procédé de réplication selon l'invention ;
- la figure 5 illustre schématiquement le mécanisme de copie sur écriture (« copy on write ») mis en oeuvre dans le procédé de réplication selon l'invention ;
- la figure 6 illustre schématiquement le mécanisme d'incrémentation pour réplication mis en oeuvre dans le procédé de réplication selon l'invention ; et
- la figure 7 illustre schématiquement le mécanisme de commutation mis en oeuvre dans le procédé de réplication selon l'invention.

On va d'abord décrire, en référence aux figures précitées, le fonctionnement du mécanisme de réplication holistique mis en oeuvre dans le procédé de réplication selon l'invention.

Pour que l'application puisse correctement tourner sur un noeud secondaire dans le cas d'un basculement, il est nécessaire que l'ensemble des ressources requises par cette application soit également répliqué sur le noeud secondaire.

Si ces ressources sont des ressources à état, i.e. qu'elles varient au fil de l'exécution de l'application et contribuent à son contexte global, alors leur état doit également être capturé et répliqué de façon cohérente.

L'ensemble de ces ressources est découvert à l'initialisation de l'application puis maintenu à jour au fil de l'eau par des mécanismes d'introspection dynamique qui permettent d'obtenir automatiquement la structure de l'application à protéger, ainsi que le graphe dynamique des ressources et dépendances mises en oeuvre.

Ces mécanismes s'appuient sur les caractéristiques réflexives des binaires, sur les mécanismes d'héritage des systèmes d'exploitation et sur la surveillance, via une instrumentation binaire, des mécanismes - incluant les appels système - qui contribuent à modifier l'état de ses ressources.

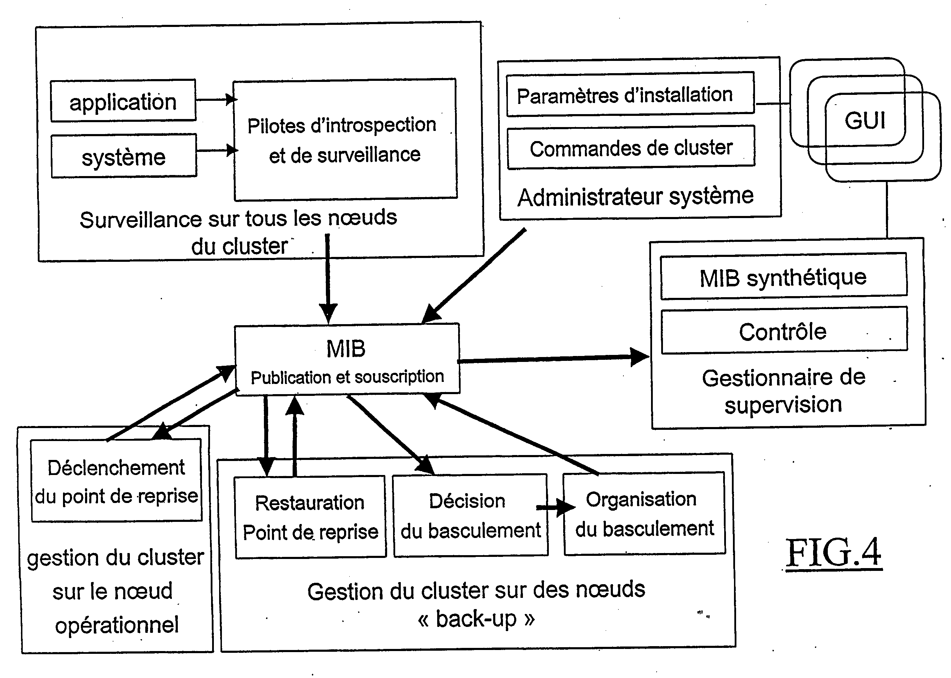

En référence à la figure 4, dans un exemple de mise en oeuvre du procédé de réplication selon l'invention, des pilotes (drivers) d'introspection et de surveillance assurent une surveillance sur tous les noeuds du cluster et transmettrent des données de surveillances à la base d'information de gestion MIB du système. Cette base MIB est sollicitée à la fois dans la gestion du cluster sur le noeud opérationnel pour les déclenchements de point de reprise (checkpoint) et dans la gestion du cluster sur des noeuds « back-up ». La base MIB est également sollicitée par le gestionnaire de supervision avec une base MIB synthétique et est accédée par l'administrateur système auquel sont associées des interfaces utilisateur graphiques (GUI).

Le résultat de ce travail de découverte et d'introspection au fil de l'eau est la création et la maintenance d'un « arbre de dépendance », qui fournit au procédé de réplication selon l'invention à chaque instant des informations sur les ressources qu'il est nécessaire de répliquer. L'existence de ce graphe garantit la complétude et la cohérence des clones.

Un autre mécanisme de point de reprise (« checkpointing »), mis en oeuvre dans le procédé de réalisation de continuité de fonctionnement selon l'invention, consiste à répliquer les ressources sur un ou plusieurs noeuds secondaires. Ce mécanisme de réplication des ressources est réalisé en trois étapes :
- capture des ressources sur le noeud primaire,
- transfert par le réseau vers un ou plusieurs noeuds secondaires, et
- restauration sur le ou les noeuds secondaires.
Les ressources répliquées incluent :
- la mémoire virtuelle de chaque processus concerné ainsi que sa pile d'appel,
- des ressources systèmes (inter process communication, connexion réseau, etc.), et
- des données écrites sur disques.

Le mécanisme de réplication des ressources assure que l'ensemble des ressources nécessaires à l'application est transféré de façon complète et cohérente (d'où holistique).

La mise en oeuvre du procédé de réplication selon l'invention garantit que l'application puisse continuer de vivre sur le secondaire sans perdre son contexte : l'application est délocalisée, le matériel et le système d'exploitation sous-jacent sont virtualisés, l'application se comportant indépendamment de sa localisation physique.

En cas de basculement, l'application n'est pas considérée comme stoppée : elle continue de tourner dans son contexte, mais sur d'autre ressources matérielles.

Les ressources mises en oeuvre par l'application sont diverses et variées (multi process, système d'exploitation, etc.). Elle vivent de façon asynchrone, sur un environnement non déterministe.

Le procédé de réplication selon l'invention met en oeuvre un algorithme de « checkpointing » (génération de points de reprise) asynchrone : une barrière de synchronisation est transmise à toutes les ressources et le procédé de réplication selon l'invention garantit que la capture d'état est complète et cohérente.

On va maintenant décrire une technique d'optimisation mise en oeuvre dans le procédé de réplication selon l'invention. La capture déterministe et complète de l'état de toutes les ressources est coûteuse pour les performances du système. Or, un faible impact sur les performances de l'application est un pré requis pour l'acceptabilité par le marché du produit et donc in fine pour son utilité. Plusieurs techniques d'optimisation ont donc été conçues et développées pour minimiser cet impact.

Premièrement, le point de reprise quasi synchrone est une optimisation des mécanismes de génération de point de reprise (checkpointing) classiques : il offre la cohérence de capture des algorithmes synchrones, sans pour autant nécessiter l'arrêt total du système pendant la capture que nécessitent les algorithmes asynchrones.

La période du point de reprise est ajustable, de sorte à optimiser le compromis entre le temps de reprise après basculement (potentiellement d'autant plus long que la période entre deux points de reprise est longue) et la quantité d'information d'état à capturer et à transférer.

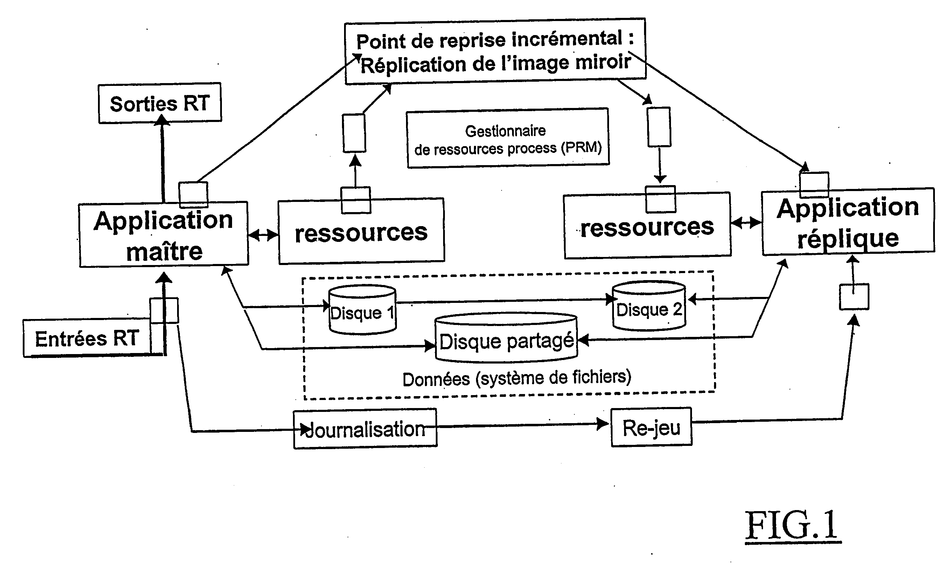

Par ailleurs, le point de reprise est incrémental : seules les différences d'état entre deux points de reprise sont transmises, comme l'illustre l'exemple fonctionnel de la figure 1. Dans cet exemple, un point de reprise incrémental est effectué à partir de l'application maître pour obtenir l'application réplique et un disque partagé entre les deux noeuds primaire et secondaire est mis en oeuvre.

Ainsi, le premier point de reprise est cher en performance (initialisation des clones) mais les suivants sont d'impact faible.

Le point de reprise est également discriminant : l'analyse intelligente du graphe de dépendance permet de limiter au strict nécessaire la quantité d'information à transmettre.

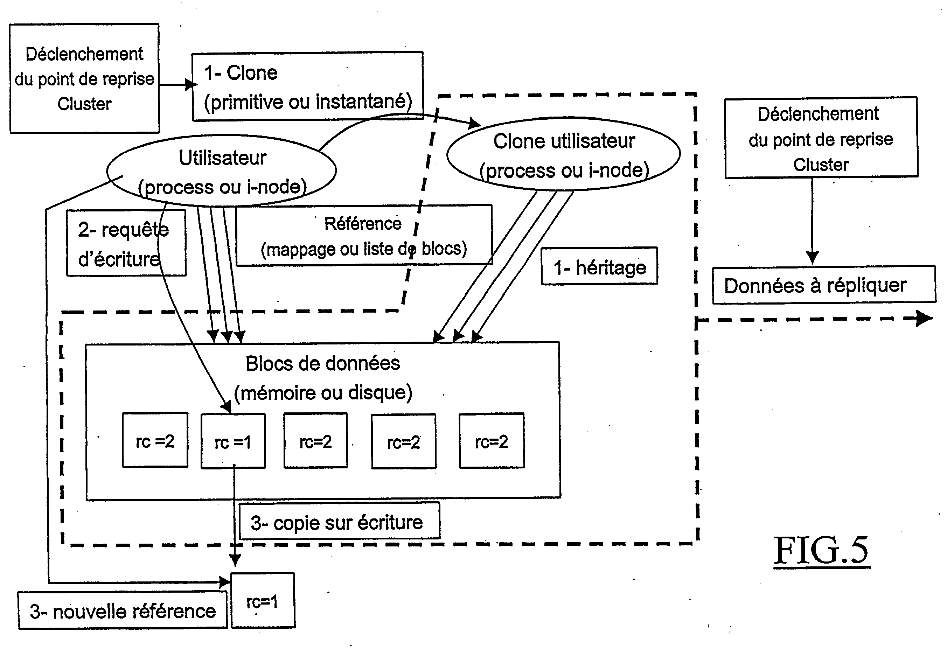

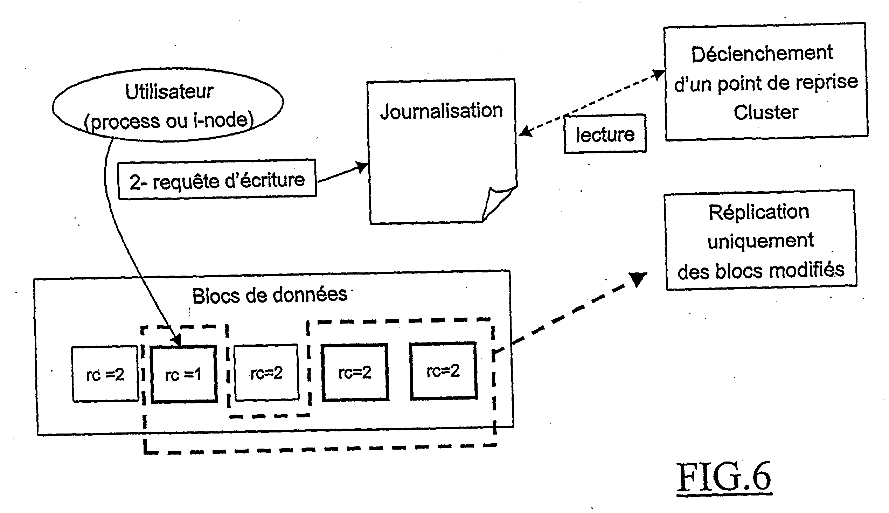

Enfin, des mécanismes de « Copy On Write » (copie sur écriture) offerts par le système d'exploitation sont mis en oeuvre pour séparer le temps de capture du temps de transfert, en référence à la figure 5 qui illustre un exemple de mise en oeuvre d'un mécanisme de copie sur écriture dans un procédé de réplication selon l'invention, à la suite du déclenchement d'un point de reprise. Dans cet exemple, le mécanisme de copie sur écriture intervient sur des blocs de données (mémoire ou disque) pour une nouvelle référence, après une requête en écriture issue d'un Utilisateur via un process ou un i-node (noeud d'index). Seuls les blocs de données modifiés sont répliqués, comme l'illustre la figure 6.

On va maintenant décrire un exemple de mise en oeuvre du mécanisme de génération de point de reprise quasi-synchrone au sein du procédé de réalisation de continuité de fonctionnement selon l'invention. Ce mécanisme inclut :
- une barrière de synchronisation de processus (« Process Synchronisation Barrier » : PSB),
- une gestion de ressources (« Ressource Management » : RM),
- une gestion de ressources système (« System Resources Management » : (SRM), et
- une gestion de ressources de processus (« Process Resources Management » (PRM).

La barrière de synchronisation de processus (PSB) est un mécanisme permettant de synchroniser le blocage des processus composant une application tout en respectant la gestion des entrées/sorties en cours, dans le but de pouvoir prendre à un instant T une "photographie" non floue de l'état du système et de l'application.

La gestion de ressources (RM) est un ensemble d'automates génériques permettant de mettre en oeuvre le séquencement des différentes phases du checkpointing vis à vis des différentes ressources nécessaires pour répliquer une application d'une machine sur une autre:
La gestion de ressources système (SRM) inclut des mécanismes permettant de gérer les différentes routines de gestion des ressources systèmes utilisées par une application (ensemble de processus) lors des différentes phases du mécanisme de génération de point de reprise.
La gestion de ressources de processus (PRM) inclut des mécanismes permettant de gérer les différentes routines de gestion des ressources utilisées par un processus lors des différentes phases du mécanisme de génération de point de reprise. Ce code est chargé dynamiquement à l'intérieur des processus applicatifs lors de leur lancement.

Il existe aujourd'hui trois phases principales qui sont elles même découpées en différentes phases nécessaires pour la captures des ressources utilisées par l'application.

La raison d'être de ces différentes sous-phases est de minimiser les temps de blocages applicatif liés à la récupération/restauration des différentes ressources applicatives et système ainsi que de garantir la cohérence des informations sauvegardées.
DUMP:
   RM_PRE_DUMP
   RM_DUMP
   RM_POST_DUMP
   RM_ABORT_DUMP
RESTORE:
   RM_PRE_RESTORE,
   RM_RESTORE,
   RM_POST_RESTORE,
   RM_ABORT_RESTORE,
SWITCH:
   RM_PRE_SWITCH,
   RM_SWITCH,
   RM_POST_SWITCH,
   RM_ABORT_SWITCH,

On va maintenant décrire une virtualisation des ressources systèmes dans le cadre du procédé de réplication selon l'invention. Certaines ressources systèmes UNIX sont caractérisées par un identifiant unique propre à chaque machine. Ces identifiants sont stockés sous forme de variables par les applications, ce qui leur permet de pouvoir les référencer. Lors de la migration d'une application d'une machine à une autre la mémoire des applications est intégralement transférée, y compris les données relatives aux ressources systèmes. Pour pouvoir garantir l'unicité du référencement des ressources système par une application META-CLUSTER met en oeuvre des mécanismes de virtualisation de ces ressources, permettant de maintenir des identifiants uniques entre les différentes machines composant un CLUSTER.

Ces mécanismes de virtualisation sont aujourd'hui appliqués pour les identifiants de ressources système suivants :
- Processus
- PIPE
- FIFO
- IPC System V
   - Mémoires partagées
   - Sémaphores
   - Message queues
- Socket AF UNIX
- Threads

Les mécanismes de virtualisation assurent donc l'unicité du référencement d'une ressource système au sein du cluster ainsi que sa translation vers une ressource système sur chaque machine. Ils sont implémentés sous la forme de modules noyau dynamiques assurant la non-préemptivité de requêtes qui leurs sont faites, sur des systèmes mono et multiprocesseurs, et avec une capacité à instrospecter les différentes routines permettant de manipuler ces identifiants.

A titre d'exemple non limitatif, une routine *getpid* est instrumentée par META lors de la prise en charge de l'application par META-CLUSTER et son utilisation par l'application retourne un CLUSTER_PID qui pourra ensuite être utilisé par l'application sur toute routine prenant un PID comme paramètres (kill, waitpid, ...).

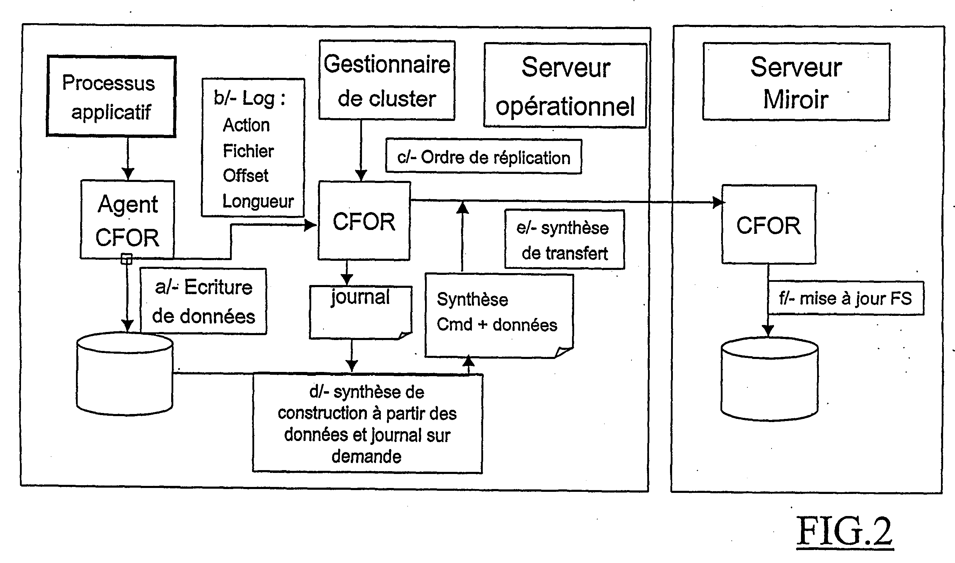

Le procédé de réplication selon l'invention inclut aussi un module de réplication de fichiers de données applicatives entre le noeud opérationnel et le noeud stand-by, désigné sous le terme de CFOR (Cluster File system Optimized Replication : Réplication Optimisée de système de Fichier pour Cluster), en en référence à la figure 2.

Le module CFOR réalise ainsi les fonctions suivantes :
a) écriture de données
b) modification du Log (journal)
c) ordre de réplication
d) synthèse construite à partir des données
e) synthèse de transfert
f) mise à jour du système de fichiers (FS)

Le fonctionnement de ce module de réplication est le suivant : entre chaque copie (dump), CFOR construit à la volée un journal cumulatif et synthétique des modifications apportées au système de fichiers par les applications contrôlées par le cluster.

Les modifications du système de fichier sont extraites à la volée par instrumentation dans les processus applicatifs des divers appels systèmes: write(2), mkdir(2), rmdir(2), unlink(2)... Le principe consiste à ne mémoriser que les actions sans les données. Ainsi si une application écrit 2Mo dans un fichier, on ne mémorise que l'action "fichier, écriture, début, fin", les 2Mo de données ayant été sauvegardés par l'OS sur le disque, il n'est pas nécessaire de les dupliquer ailleurs.

Les écritures multiples sont synthétisées au fil de l'eau. Si une application effectue les actions suivantes:
1. ouverture du fichier 'toto'
2.écriture de 30000 octets à l'offset 30 dans le fichier toto
3.écriture de 20000 octets à l'offset 20 dans le fichier toto
4.fermeture du fichier 'toto'

Le log CFOR résultant sera:
- fichier toto, 20 ? 30030

Au moment de la copie (dump), les données structurelles (metadata) ainsi que le contenu des modifications sont enregistrés dans un fichier séparé.

Ce fichier séparé est transmis sur le noeud stand-by et son exploitation permet de synchroniser l'arborescence de manière à ce qu'elle soit strictement identique à celle du noeud opérationnel au moment du dump.

On va maintenant décrire le mécanisme de synchronisation mis en oeuvre dans le procédé de réplication selon l'invention.

Lors de l'apparition d'une machine SB, il faut synchroniser son système de fichiers (FS) par rapport à celui du noeud opérationnel OP. Cette synchronisation doit se faire sans bloquer le noeud opérationnel OP donc elle se fait sur un système de fichiers en constante évolution. Afin d'éviter le problème des images floues, la synchronisation se fait au travers d'un instantané (snapshot) du système de fichiers (file system) du noeud opérationnel OP. La procédure est décomposée en 2 phases afin de limiter la taille du log de CFOR.
1. Création d'un instantané (snapshot) sur le noeud opérationnel OP
2. 1ère synchro avec le noeud SB
3. Destruction de l'instantané (snapshot) sur le noeud opérationnel OP
4. Activation du log de CFOR et création d'un 2éme instantané (snapshot) sur le noeud opérationnel OP
5.2éme synchronisation avec le noeud SB (elle doit être la plus courte possible).
6. Suppression de l'instantané (snapshot) sur le noeud opérationnel OP, le noeud SB étant prêt à recevoir un première copie (dump) totale.
7.A la prochaine copie (dump), transfert du log de CFOR et mise à jour du système de fichiers FS du noeud SB avec les données de CFOR
8.le cycle normal des copie/restauration (dump/restore) est en place.

La recopie de la mémoire d'un processus se fait en analysant dynamiquement l'organisation mémoire interne du processus et en isolant les différentes zones :
- texte
- données
- pile d'exécution

L'analyse de la mémoire est effectuée sans intrusion dans le code utilisateur en s'appuyant sur les données fournies par le système d'exploitation (Operating System). Ces données sont capturées et analysées dans le contexte même du processus et permettent de créer la table des zones mémoires utilisées.

Une fois l'analyse terminée, les agents d'interposition des appels système d'allocation/libération mémoire assurent le suivi de l'évolution de la table des zones mémoires.

Lors de la copie (dump), seules les zones mémoire modifiables, c'est à dire accessibles en écriture sont transférées sur le noeud stand-by où elles seront recopiées. Ainsi le processus sur le noeud stand-by contient les mêmes zones mémoires avec les mêmes données que sur le noeud opérationnel.

La sauvegarde du contenu de la mémoire devant être atomique du point de vue d'un processus, elle doit se faire sans que le processus ne puisse en changer l'état, donc processus bloqué. Afin de ne pas bloquer le processus trop longtemps, on s'appuie sur le mécanisme de « Copy On Write » du système d'exploitation (primitive (fork) par exemple) pour créer une copie de l'image mémoire du processus et on transfert cette image vers les noeuds stand-by. Une fois le transfert terminé, l'image mémoire maintenue par les mécanismes de « Copy On Write » est supprimée.

Le procédé de réplication selon l'invention met aussi en oeuvre un mécanisme de copie (dump) incrémentale qui s'appuie sur l'analyse mémoire, mais ajoute en plus un mécanisme de protection des pages en écriture.

Une fois l'analyse des pages effectuée, toutes les pages accessibles en écriture sont protégées, c'est à dire qu'une écriture dans une de ces pages déclenche l'émission d'un signal de violation de protection de pages.

La protection s'appuie sur les mécanismes fournis par le système d'exploitation tel que l'appel système « mprotect ».

Lorsque l'application tente de modifier une donnée, la ou les pages contenant cette donnée sont marquées comme modifiées et déprotégées. Le déroulement du code applicatif n'est pas impacté par l'adjonction de ces mécanismes (non intrusivité).

Lors d'une copie (dump) incrémentale, seules les pages modifiées depuis le précédent dump sont transférées. La copie (dump) terminée, toutes les pages modifiées sont re-protégées afin de détecter les prochaines écritures. La copie (dump) incrémentale permet de réduire la taille des données à transférer vers le stand-by à chaque copie (dump).

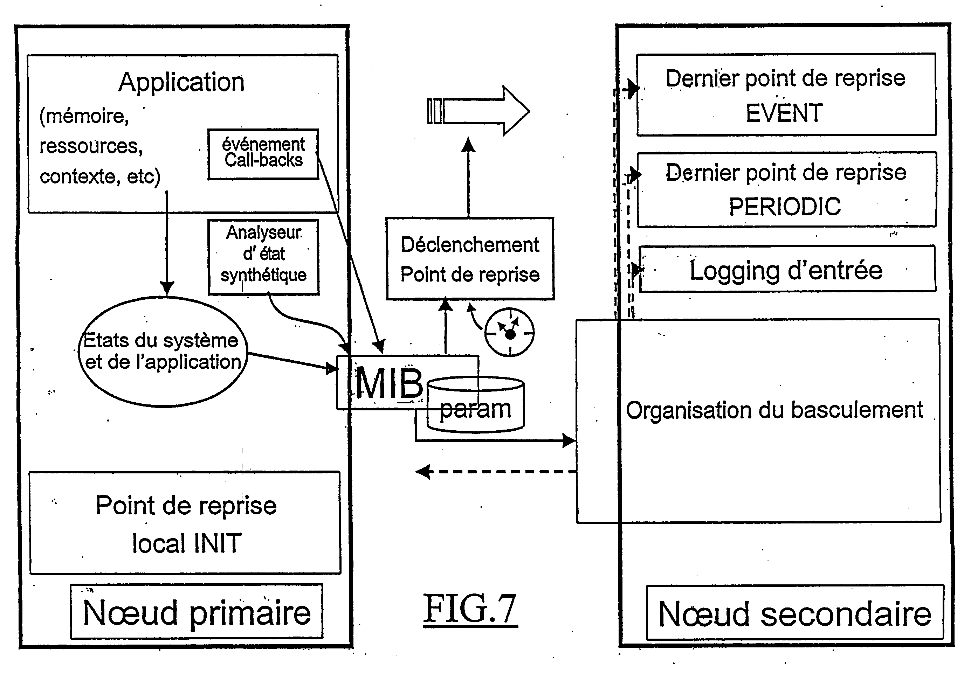

La gestion des déclenchements des points de reprise peut être effectuée à partir de la base MIB qui reçoit, du noeud primaire ou opérationnel, des informations sur les états du système et de l'application, des informations sur les événements et call-back sur l'application et des informations délivrées par un analyseur d'état synthétique, comme l'illustre la figure 7. L'organisation du basculement de l'application du noeud primaire vers un noeud secondaire agit par exemple sur un dernier point de reprise EVENT, un dernier point de reprise PERIODIC, un enregistrement (logging) d'entrée, et peut inclure :
- le choix d'un scénario de basculement,
- le choix d'un point de reprise,
- le déclenchement de la restauration,
- le déclenchement (ou non) du re-jeu du Log
- la notification du nouveau noeud opérationnel.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour répliquer une application logicielle comprenant un ensemble de processus dans une architecture multi-ordinateurs de type cluster, ladite application logicielle étant préalablement exécutée sur un premier ordinateur dudit cluster constituant un noeud primaire et étant destinée à être répliquée sur au moins un autre ordinateur dudit cluster constituant un noeud secondaire, le procédé comprenant les étapes consistant à :
- découvrir les ressources requises par l'application, ces ressources incluant :
- la mémoire virtuelle de chaque processus concerné ainsi que sa pile d'appel,
- des ressources systèmes incluant au moins une structure logicielle incluse dans la mémoire de travail du noeud primaire, et
- des données écrites sur disques;
- créer et maintenir un graphe de dépendance contenant des informations sur lesdites ressources découvertes,
- répliquer lesdites ressources découvertes du noeud primaire vers certains au moins desdits noeuds secondaires à partir du graphe de dépendances de manière à capturer de manière cohérente et complète au niveau de chaque noeud secondaire l'état des ressources requises par l'application dans le noeud primaire, lesdites étapes de découverte des ressources, de création et de maintien du graphe de dépendance étant mises en oeuvre par un mécanisme d'introspection dynamique opérant dans le contexte de chaque processus, ledit mécanisme d'introspection étant apte à analyser dynamiquement l'organisation de la mémoire interne de chaque processus sans intrusion dans le code utilisateur à partir de données fournies par le système d'exploitation.

2. Procédé de réplication selon la revendication 1, **caractérisé en ce que** l'étape de réplication met en oeuvre un mécanisme de génération de point de reprise, par lequel les ressources à répliquer sont répliquées sur un ou plusieurs noeuds secondaires.

3. Procédé de réplication selon la revendication 2, **caractérisé en ce que** le mécanisme de génération de point de reprise comprend trois étapes :
- capture des ressources sélectionnées sur le noeud primaire,
- transfert par le réseau vers un ou plusieurs noeuds secondaires, et
- restauration sur le ou les noeuds secondaires.

4. Procédé de réplication selon l'une quelconque des revendications 2 et 3, **caractérisé en ce** le mécanisme de génération de point de reprise est quasi-synchrone.

5. Procédé de réplication selon l'une des revendications 3 à 4, **caractérisé en ce que** le mécanisme de génération de point de reprise est incrémental.

6. Procédé de réplication selon l'une des revendications 3 à 5, **caractérisé en ce que** le mécanisme de génération de point de reprise est discriminant.

7. Procédé de réplication selon l'une des revendications 4 à 6, **caractérisé en ce que** le mécanisme de génération de point de reprise inclut au moins l'une des fonctions suivantes :
- une barrière de synchronisation de processus (PSB),
- une gestion de ressources (RM),
- une gestion de ressources système (SRM), et
- une gestion de ressources de processus (PRM).

8. Procédé de réplication selon l'une quelconque des revendications précédentes, **caractérisé en ce qu'**il comprend en outre un mécanisme de réplication de fichiers de données applicatives entre le noeud primaire (OP) sur lequel l'application est exécutée et un desdits noeuds secondaires.

9. Procédé mettant en oeuvre le procédé de réplication selon l'une quelconque des revendications précédentes pour réaliser une continuité de fonctionnement d'une application logicielle dans une architecture multi-ordinateurs de type cluster, cette application étant exécutée à un instant donné sur l'un des ordinateurs du cluster, appelé noeud primaire, les autres ordinateurs dudit cluster étant appelés noeuds secondaires, **caractérisé en ce que**, en cas de détection d'une défaillance ou d'un événement affectant ledit noeud principal, il met en oeuvre un basculement de service vers au moins l'un desdits noeuds secondaires.

10. Procédé de continuité de fonctionnement selon la revendication 9, **caractérisé en ce que** la réplication de l'application est de nature holistique.

11. Procédé de continuité de fonctionnement selon l'une revendications 9 et 10, **caractérisé en ce qu'**il comprend en outre une mise à jour des répliques de l'application.

12. Procédé de continuité de fonctionnement selon l'une des revendications 9 à 11, **caractérisé en ce qu'**il comprend en outre une supervision de l'état de ressources nécessaires au fonctionnement de l'application.

13. Procédé de continuité de fonctionnement selon l'une des revendications 9 à 12, **caractérisé en ce qu'**il comprend en outre, à la suite d'une détection d'une défaillance ou d'un événement affectant le noeud primaire, une étape pour élire, parmi lesdits noeuds secondaires, un clone, le clone ainsi élu devenant le nouveau noeud primaire.

14. Procédé de continuité de fonctionnement selon l'une des revendications 13, **caractérisé en ce qu'**il comprend en outre un enregistrement sur chaque noeud secondaire de messages reçus par le noeud primaire, ces messages étant réinjectés dans le clone élu en cas de basculement.

15. Système multi-ordinateurs prévu pour exécuter sur au moins un desdits ordinateurs au moins une application logicielle, implémentant le procédé pour réaliser une continuité de fonctionnement selon l'une quelconque des revendications 9 à 14.

16. Application du procédé de réplication selon l'une quelconque des revendications 1 à 8, pour une optimisation automatique de ressources informatiques par partage de charge par répartition dynamique de processus.

17. Application du procédé de réplication selon l'une quelconque des revendications 1 à 8, pour une maintenance non interruptive par relocation à la demande de processus au travers d'un réseau de ressources informatiques.

18. Application du procédé de réplication selon l'une quelconque des revendications 1 à 8, pour une préservation de contexte applicatif dans des applications mobiles.

## Claims

1. Method for replicating a software application comprising a set of processes in a cluster type multi-computer architecture, said software application having first been executed on a first computer of said cluster to constitute a primary node and being destined to be replicated on at least one other computer of said cluster to constitute a secondary node, the method comprising the steps of:
- detecting the resources required by the application, these resources including:
- the virtual memory of each process concerned together with its call stack,
- the system resources including at least one software structure included in the primary node working memory, and
- data recorded on disks;
- creating and maintaining a dependency graph containing information concerning said detected resources,
- replicating said detected resources from the primary node to at least some of said secondary nodes via the dependency graph to consistently and comprehensively capture at each secondary node the state of the resources required by the application in the primary node, said steps of resource detection, creation and maintenance of dependency graph being implemented by a dynamic introspection mechanism able to analyse dynamically the organisation of the internal memory of each process without intruding into the user code based on data provided by the operating system.

2. Replication method according to claim 1, **characterised by** the replication step implementing a check point generation mechanism by which the resources to be replicated are replicated onto one or more secondary nodes.

3. Replication method according to claim 2, **characterised by** the check point generation mechanism comprising three steps:
- capture of the resources selected on the primary node,
- transfer via the network to one or several secondary nodes, and
- restoration on the secondary node(s).

4. Replication method according to any one of claims 2 and 3, **characterised in that** the check point generation mechanism is quasi-synchronous.

5. Replication method according to any one of claims 3 and 4, **characterised in that** the check point generation mechanism is incremental.

6. Replication method according to any one of claims 3 to 5, **characterised in that** the check point generation mechanism is discriminating.

7. Replication method according to any one of claims 4 to 6, **characterised by** the check point generation mechanism including at least one of the following functions:
- process synchronisation barrier (PSB),
- resource management (RM),
- system resource management (SRM), and
- process resource management (PRM).

8. Replication method according to any one of the preceding claims, **characterised by** also comprising an application data file replication mechanism between the primary node (OP) on which the application is executed and one of said secondary nodes.

9. Method for implementing the replication process according to any one of the preceding claims to provide operating continuity for a software application in a cluster type multi-computer architecture, this application being executed at a given time on one of the cluster computers, called primary node, the other computers in said cluster being called secondary nodes, **characterised in that**, in the event of failure or an event affecting said primary node being detected, it implements a fail-over of service to at least one of said secondary nodes.

10. Operating continuity method according to claim 9, **characterised by** replication of the application being holistic in nature.

11. Operating continuity method according to one of claims 9 and 10, **characterised by** including also an update of application replications.

12. Operating continuity method according to one of claims 9 to 11, **characterised by** including also supervision of the state of resources necessary for the application to operate.

13. Operating continuity method according to one of claims 9 to 12, **characterised by** including also a step, in the event of failure or an event affecting the primary node being detected, to select a clone from said secondary nodes, the clone thus selected becoming the new primary node.

14. Operating continuity method according to claim 13, **characterised by** including also a record on each secondary node of the messages received by the primary node, these messages being reinjected into the selected clone in the event of fail-over.

15. Multi-computer system designed to execute on at least one of said computers at least one software application, implementing the process to achieve operating continuity according to any one of claims 9 to 14.

16. Application of the replication method according to any one of claims 1 to 8, for automatic optimisation of computer resources by load sharing by means of dynamic process sharing.

17. Application of the replication method according to any one of claims 1 to 8, for non interruptive maintenance by on demand process relocating via a computer resource network.

18. Application of the replication method according to any one of claims 1 to 8, to preserve the application context in mobile applications.

## Patentansprüche

1. Verfahren zum Replizieren einer Softwareanwendung, die eine Anzahl von Prozessen umfasst, in einer Multicomputer-Architektur vom Clustertyp, wobei die Softwareanwendung vorher auf einem ersten Computer des Cluster ausgeführt wird, der einen Primärknoten darstellt, und auf mindestens einem anderen Computer des Cluster, der einen Sekundärknoten darstellt, repliziert werden soll, wobei das Verfahren die folgenden Schritte umfasst:
- Ermitteln der für die Anwendung erforderlichen Ressourcen, wobei die Ressourcen Folgendes beinhalten:
- den virtuellen Speicher jedes beteiligten Prozesses sowie den Stapelspeicher,
- Systemressourcen, die mindestens eine im Arbeitsspeicher des Primärknotens enthaltene Softwarestruktur beinhalten, und
- auf Plattenlaufwerken gespeicherte Daten;
- Erstellen und Verwalten eines Abhängigkeitsgraphen, der Daten über die ermittelten Ressourcen enthält,
- Replizieren der vom Primärknoten ermittelten Ressourcen auf mindestens einigen der Sekundärknoten ausgehend von dem Abhängigkeitsgraphen, sodass der Zustand der für die Anwendung im Primärknoten erforderlichen Ressourcen auf der Ebene jedes Sekundärknotens kohärent und vollständig erfasst wird, wobei die Schritte der Ressourcenermittlung und der Erstellung und Verwaltung des Abhängigkeitsgraphen durch einen in Verbindung mit jedem Prozess ausgeführten dynamischen internen Prüfmechanismus ausgeführt werden, wobei der interne Prüfmechanismus in der Lage ist, ausgehend von den vom Betriebssystem gelieferten Daten die interne Speicherorganisation jedes Prozesses dynamisch zu analysieren, ohne auf den Benutzercode zuzugreifen.

2. Replikationsverfahren nach Anspruch 1, **dadurch gekennzeichnet, dass** mit dem Replikationsschritt ein Mechanismus zum Erzeugen eines Wiederanlaufpunktes gestartet wird, von dem aus die zu replizierenden Ressourcen auf einem oder mehreren Sekundärknoten repliziert werden.

3. Replikationsverfahren nach Anspruch 2, **dadurch gekennzeichnet, dass** der Mechanismus zum Erzeugen eines Wiederanlaufpunktes drei Schritte umfasst:
- Erfassen der ausgewählten Ressourcen des Primärknotens,
- Übertragen an einen oder mehrere Sekundärknoten über das Netzwerk, und
- Wiederherstellen des oder der Sekundärknoten.

4. Replikationsverfahren nach einem beliebigen der Ansprüche 2 und 3, **dadurch gekennzeichnet, dass** der Mechanismus zum Erzeugen des Wiederanlaufpunktes quasisynchron abläuft.

5. Replikationsverfahren nach einem der Ansprüche 3 bis 4, **dadurch gekennzeichnet, dass** der Mechanismus zum Erzeugen des Wiederanlaufpunktes schrittweise abläuft.

6. Replikationsverfahren nach einem der Ansprüche 3 bis 5, **dadurch gekennzeichnet, dass** der Mechanismus zum Erzeugen des Wiederanlaufpunktes separat abläuft,

7. Replikationsverfahren nach einem der Ansprüche 4 bis 6, **dadurch gekennzeichnet, dass** der Mechanismus zum Erzeugen des Wiederanlaufpunktes mindestens eine der folgenden Funktionen beinhaltet:
- einen Schwellenwert für die Prozesssynchronisation (process synchronisation barrier, PSB),
- eine Ressourcenverwaltung (resource management, RM),
- eine Systemressourcenverwaltung (system resource management, SRM), und
- eine Prozessressourcenverwaltung (process resource management, PRM).

8. Replikationsverfahren nach einem der vorhergehenden Ansprüche, **dadurch gekennzeichnet, dass** es ferner einen Mechanismus zur Replikation von Dateien mit Anwendungsdaten zwischen dem Primärknoten (OP), auf welchem die Anwendung ausgeführt wird, und einem der Sekundärknoten umfasst.

9. Verfahren zum Ausführen des Replikationsverfahrens nach einem der vorhergehenden Ansprüche, um einen unterbrechungsfreien Betrieb einer Anwendungssoftware in einer Multicomputer-Architektur vom Clustertyp zu gewährleisten, wobei die Anwendung zu einem bestimmten Zeitpunkt auf einem der als Primärknoten bezeichneten Computer des Cluster ausgeführt wird und die anderen Computer des Cluster als Sekundärknoten bezeichnet werden, **dadurch gekennzeichnet, dass** das Verfahren im Fall des Erkennens eines Ausfalls oder eines den Hauptknoten betreffenden Ereignisses den Dienst auf mindestens einen der Sekundärknoten verlagert.

10. Verfahren zur Gewährleistung des unterbrechungsfreien Betriebs nach Anspruch 9, **dadurch gekennzeichnet, dass** die Replikation der Anwendung vollständig erfolgt.

11. Verfahren zur Gewährleistung des unterbrechungsfreien Betriebs nach einem der Ansprüche 9 und 10, **dadurch gekennzeichnet, dass** es ferner eine Aktualisierung von Replikationen der Anwendung umfasst.

12. Verfahren zur Gewährleistung des unterbrechungsfreien Betriebs nach einem der Ansprüche 9 bis 11, **dadurch gekennzeichnet, dass** es außerdem eine Überwachung des Zustandes der für den Betrieb der Anwendung erforderlichen Ressourcen umfasst.

13. Verfahren zur Gewährleistung des unterbrechungsfreien Betriebs nach einem der Ansprüche 9 bis 12, **dadurch gekennzeichnet, dass** es ferner einen Schritt zum Auswählen eines Klons aus den Sekundärknoten sofort nach dem Erkennen eines Ausfalls oder eines den Primärknoten betreffenden Ereignisse umfasst, wobei der somit ausgewählte Klon zum neuen Primärknoten wird.

14. Verfahren zur Gewährleistung des unterbrechungsfreien Betriebs nach Anspruch 13, **dadurch gekennzeichnet, dass** es außerdem das Registrieren vom Primärknoten empfangener Nachrichten auf jedem Sekundärknoten umfasst, wobei diese Nachrichten im Falle der Verlagerung wieder in den ausgewählten Klon eingegeben werden.

15. Multicomputersystem zum Ausführen mindestens einer Softwareanwendung auf mindestens einem der Computer, wobei das System einen unterbrechungsfreien Betrieb nach einem der Ansprüche 9 bis 14 gewährleistet.

16. Anwendung des Replikationsverfahrens nach einem der Ansprüche 1 bis 8 zur automatischen Optimierung von Datenverarbeitungsressourcen durch Lastverteilung mittels dynamischer Umverteilung von Prozessen.

17. Anwendung des Replikationsverfahrens nach einem der Ansprüche 1 bis 8 zur unterbrechungsfreien Wartung durch Verlagerung von Prozessen auf Anforderung über ein Netzwerk von Datenverarbeitungsressourcen hinweg.

18. Anwendung des Replikationsverfahrens nach einem der Ansprüche 1 bis 8 zur Aufrechterhaltung der Anwendungssituation bei mobilen Anwendungen.
